# EUROPÄISCHE PATENTANMELDUNG

(11) **EP 1 158 280 A1**
(43) Veröffentlichungstag der Anmeldung: **28.11.2001**
(21) Anmeldenummer: 01109555.1
(22) Anmeldetag: 18.04.2001
(51) Int. Cl.: G01F 19/00

(54) **Messlöffel**

(30) Priorität: 11.05.2000 DE 10023017
(71) Anmelder: Hugo Meding GmbH, 58553 Halver (DE)
(72) Erfinder: Pietzner, Stefan, 58511 Lüdenscheid (DE)
(74) Vertreter: Hassler, Werner, Dr.

(57) **Zusammenfassung**

Ein Meßlöffel aus einem Thermoplast mit Maßstegen auf der Innenwand der Löffelschale. Das technische Problem ist eine Gestaltung der Maßstege mit deutlicher Strukturierung und hohem Kontrast. Die Maßstege (3, 4) sind als Einlagen aus einem Thermoplast anderer Farbe als die Löffelschale (2) ausgebildet.

## Beschreibung

Die Erfindung betrifft einen Meßlöffel aus einem Thermoplast mit Maßstegen auf der Innenwand der Löffelschale.

Ein derartiger Meßlöffel dient insbesondere zur abgemessenen Einnahme von Arzneien in flüssiger oder pastöser Form.

Der Meßlöffel besteht normalerweise aus einem transparenten Thermoplast. Auf der Innenwand der Löffelschale sind Maßstege zur Abmessung der Arznei in abgestuften Mengen z.B. von 5 ml, 2,5 ml und 1,25 ml ausgebildet. Die Maßstege sind nur undeutlich und teilweise unsicher erkennbar, weil der Kontrast der Struktur der Maßstege innerhalb des transparenten Thermoplast gering ist.

Aufgabe der Erfindung ist eine Gestaltung der Maßstege mit deutlicher Strukturierung und hohem Kontrast.

Diese Aufgabe wird nach der Erfindung dadurch gelöst, daß die Maßstege als Einlagen aus einem Thermoplast anderer Farbe als die Löffelschale ausgebildet sind.

Die Erfindung unterscheidet sich insofern vom Stand der Technik, als die Maßstege nicht nur durch Strukturierung, sondern auch durch Farbgebung von der Löffelschale unterschieden sind. Dadurch ist ein hoher und deutlich erkennbarer Kontrast gewährleistet.

Eine besonders stabile Ausbildung und Einbettung der Maßstege wird dadurch erzielt, daß die Maßstege durch ein Zweikomponentenspritzgießverfahem innerhalb der Löffelschale integriert ausgebildet sind. Durch das Zweikomponentenspritzgießverfahem ist eine stoffschlüssige Einbettung der Maßstege sichergestellt.

Ein hoher Kontrast wird dadurch erzielt, daß auf der Innenwand der Löffelschale Maßstege aus einem Thermoplast unterschiedlicher Farbe ausgebildet sind.

Eine stoffschlüssige und integrale Halterung der Maßstege wird dadurch erzielt, daß der umlaufende Maßsteg über einen Kanal mit einer angußlosen Anbindung verbunden ist. Die angußlose Anbindung wird durch eine Heißkanaldüse erzielt.

Maßstege für verschiedene Maßmengen lassen sich dadurch miteinander verbinden, daß von dem umlaufenden Maßsteg Schenkel zu dem Maßsteg reichen, der nahezu auf dem Grund der Löffelschale die kleinste Maßmenge bezeichnet.

Ein Ausführungsbeispiel wird anhand der Zeichnung erläutert, in der darstellen:
Fig. 1 einen Meßlöffel in der Draufsicht und
Fig. 2 einen Schnitt durch den Meßlöffel.

Der Meßlöffel umfaßt einen Stiel 1 und eine Löffelschale 2. Der Meßlöffel ist aus einem transparenten Thermoplast durch Spritzgießen hergestellt.

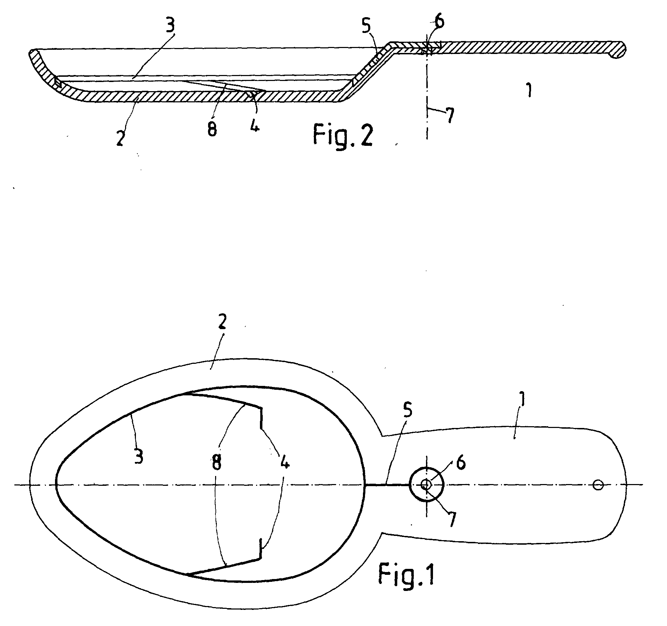

Auf der Innenwand der Löffelschale 2 sind Maßstege 3 und 4 aus einem Thermoplast unterschiedlicher Farbe ausgebildet. Der umlaufende Maßsteg 3 ist über einen Kanal 5 mit einer angußlosen Anbindung 6 einer Heißkanaldüse 7 verbunden, die in Fig. 2 strichpunktiert angedeutet ist. Von dem umlaufenden Maßsteg 3 reichen Schenkel 8 zu dem Maßsteg 4, der nahezu auf dem Grund der Löffelschale 2 die kleinste Maßmenge bezeichnet.

Die Struktur der Maßstege 3, 4, des Kanals 5 und der Anbindung 6 ist zusammenhängend in einem Wechselkern des Spritzgießwerkzeugs geformt. Damit kann man die Maßstege in einem Zweikomponentenspritzgießverfahren stoffschlüssig mit der Löffelschale ausbilden.

## Patentansprüche

1. Meßlöffel aus einem Thermoplast mit Maßstegen auf der Innenwand der Löffelschale, **dadurch gekennzeichnet, daß** die Maßstege (3, 4) als Einlagen aus einem Thermoplast anderer Farbe als die Löffelschale (2) ausgebildet sind.

2. Meßlöffel nach Anspruch 1, **dadurch gekennzeichnet, daß** die Maßstege (3, 4) durch ein Zweikomponentenspritzgießverfahern innerhalb der Löffelschale (2) integriert ausgebildet sind.

3. Meßlöffel nach Anspruch 2, **dadurch gekennzeichnet, daß** auf der Innenwand der Löffelschale (2) Maßstege (3, 4) aus einem Thermoplast unterschiedlicher Farbe ausgebildet sind.

4. Meßlöffel nach Anspruch 2 oder 3, **dadurch gekennzeichnet, daß** der umlaufende Maßsteg (3) über einen Kanal (5) mit einer angußlosen Anbindung (6) verbunden ist.

5. Meßlöffel nach Anspruch 4, **dadurch gekennzeichnet, daß** von dem Maßsteg (3) Schenkel (8) zu dem Maßsteg (4) reichen, der nahezu auf dem Grund der Löffelschale (2) die kleinste Maßmenge bezeichnet.
